# EUROPEAN PATENT SPECIFICATION

(11) **EP 0 393 260 B1**
(45) Date of publication and mention of the grant of the patent: **22.06.1994**
(21) Application number: 89303773.9
(22) Date of filing: 17.04.1989
(51) Int. Cl.: B23Q 16/10

(54) **Indexable turntable for a machine tool**
Indexierbarer Drehtisch für Werkzeugmaschinen
Table rotative d'indexage pour une machine-outil

(43) Date of publication of application: 24.10.1990
(73) Proprietor: KABUSHIKI KAISHA KOMATSU SEISAKUSHO, Minato-ku Tokyo 107 (JP)
(72) Inventor: Kitagawa, Hiroshi, Sakai-gun Fukui-ken (JP); Daimaru, Koji, Komatsu-shi Ishikawa-ken (JP); Otomaru, Iwao, Komatsu-shi Ishikawa-ken (JP)
(74) Representative: Newstead, Michael John

(56) References cited:
- EP-A- 0 343 347
- FR-A- 2 073 625
- GB-A- 2 094 678
- US-A- 3 146 640

## Description

The present invention relates to a machine tool. More particularly it relates to a machine tool of the type including a housing and a turntable turnably supported on the housing.

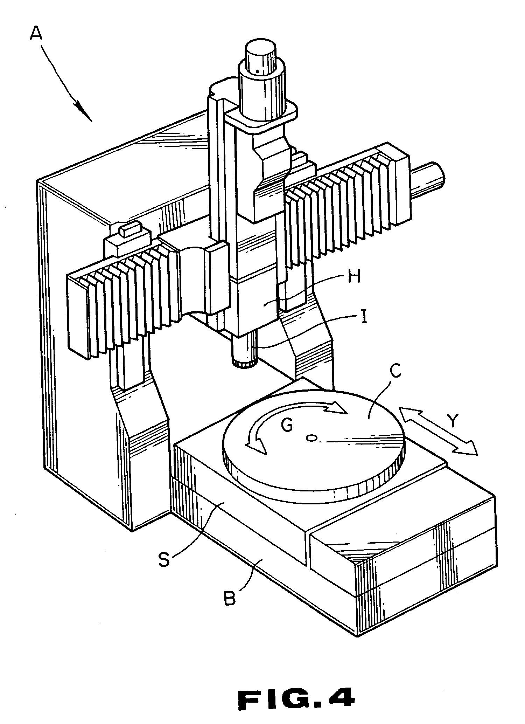

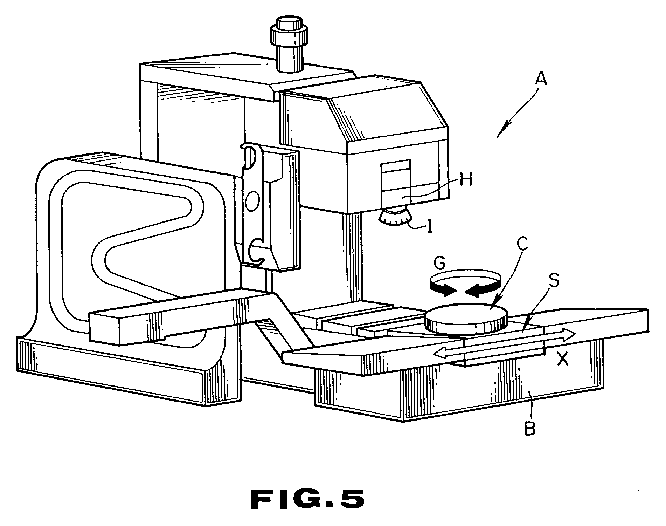

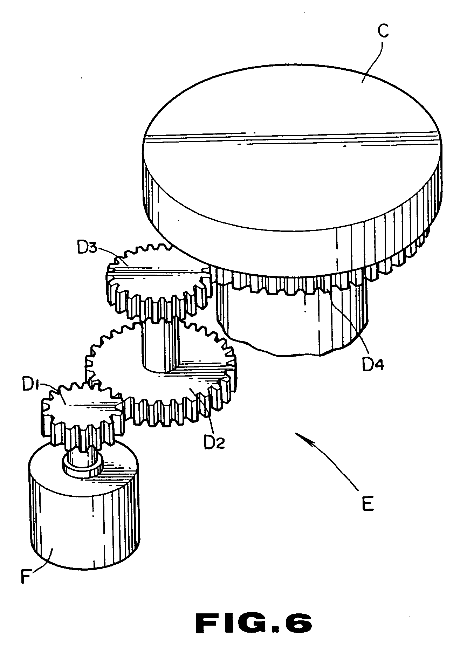

Reference will first be made to Figures 4, 5 and 6 of the accompanying drawings, Figure 4 being a perspective view illustrating by way of example a machine tool of the type including a turntable, Figure 5 being a perspective view illustrating by way of example a machine tool of the type including a slide table and a turntable, and Figure 6 being a perspective view illustrating a driving mechanism for the turntable. As shown in these Figures the machine tool A has its slide table S mounted on a bed B for moving slidably in the directions of arrow Y in Figure 4 or in the directions of arrow X in Figure 5. The turntable C is mounted on the slide table S. As shown in Figure 6, the turntable C is driven by a motor F in the directions of arrow G (see Figures 4 and 5) via a gear train E comprising a plurality of gears D₁, D₂, D₃ and D₄. As the turntable C is turned, a workpiece fixably mounted on the turntable C is turned so that it can be machined in accordance with two operative modes, one of these being a machining mode in which, with the turntable C turning continuously, the workpiece is machined by a cutting tool I attached to a head H and the other being an indexing mode in which the cutting tool I is displaced in order to perform a machining operation each time the turntable C has been turned through a predetermined angle and then held stationary.

With a machine tool A as constructed in the above-described manner, however, it has been found that when operating in the indexing mode, that is the workpiece on the turntable C is machined by the cutting tool I attached to the head H while the turntable C is kept immovable, the turntable C is undesirably displaced by a very short distance due to back-lash in the gear train E or the like factor under the influence of the load exerted on the workpiece by the cutting tool I. This leads to a drawback that the workpiece is machined at a reduced accuracy. When apparatus for eliminating the back-lash is incorporated in the turntable C to obviate this drawback, the result is that the machine tool A becomes complicated in structure, it is unavoidably designed and constructed in larger dimensions and it is manufactured at an expensive cost.

GB 2 094 678-A, considered to represent the closest state of the art, discloses a machine tool having the precharacterising features of claim 1.

According to the present invention there is provided a machine tool including;-
a housing;
a turntable turnably supported on the housing;
a plurality of first dog teeth stationary with the housing;
a plurality of second dog teeth fast with the turntable;
joint means including a plurality of third dog teeth and an actuator for bringing the third dog teeth into meshing engagement with the first and second dog teeth to place the turntable in a locked state relative to the housing and for disengaging such engagement;
a ring gear for rotating the turntable when the ring gear comes into meshing engagement with a gear driven by a drive source; and
a bearing interposed between the housing and the turntable and capable of receiving a load applied in the direction of a rotational axis of the turntable during machining, characterised in that:-
the ring gear is secured to the turntable at the outer periphery of the turntable in the vicinity of a work setting surface of the turntable; and
the bearing is positioned radially outwards of the first, second and third dog teeth.

For a better understanding of the invention and to show how the same may be carried into effect, reference will now be made, by way of example, to Figures 1 to 3 of the accompanying drawings, in which:
Figure 1 is a sectional side view of part of a machine tool, and
Figures 2 and 3 are sectional side views of a detail of the machine tool of Figure 1 drawn to a larger scale and illustrating different operative states.

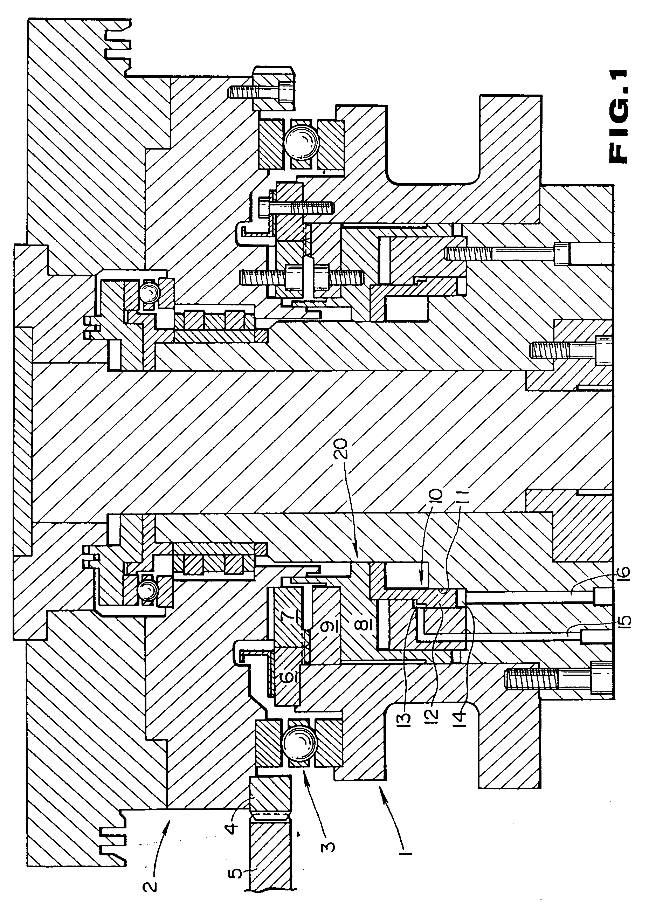

In Figures 1 to 3 the reference numeral 1 designates a frame serving as a housing of the machine tool. The frame 1 is the slide table of the machine (shown as S in Figures 4 and 5). Reference numeral 2 designates a turntable. The turntable 2 is turnably supported on the frame 1 via a ball bearing 3. In addition, the turntable 2 has a ring gear 4 secured thereto which meshes with a gear 5 adapted to be rotationally driven by a motor (not shown), the ring gear 4 being provided at the outer periphery of the turntable 2 in the vicinity of a work setting surface of the turntable.
An annular block 6 is fixedly mounted on the upper surface of the frame 1 in a concentric relationship relative to the frame 1. A series of first dog teeth 6a is integrally formed along the whole periphery of the lower surface of the annular block 6 so as to be stationary with the frame 1 serving as the housing of the machine tool.

An annular block 7 having a smaller diameter than the block 6 is fixedly secured to the lower surface of the turntable 2 in a concentric relationship relative to the turntable 2, fitted to the inner periphery of the block 6. A series of second dog teeth 7a having the same pitch as that of the dog teeth 6a is integrally formed along the whole periphery of the lower surface of the annular block 7. As is apparent from the drawings, the dog teeth 6a that are stationary with the housing and the dog teeth 7a are located on a common plane intersecting a centre axis of the turntable 2 at right angles, the teeth extending along this plane.

An annular slide block 8 disposed in a region below the two series of dog teeth 6a and 7a is slidably movable in the direction of the centre axis of the turntable 2. An annular joint block 9 is fixedly mounted on the upper surface of the slide block 8 in a concentric relationship relative to the turntable 2. A series of third dog teeth 9a is integrally formed along the whole periphery of the upper surface of the joint block, these teeth extending along a plane intersecting the centre axis of the turntable 2 and being located opposite the first and second dog teeth 6a, 7a. The bearing 3 is positioned radially outwards of the dog teeth 6a, 7a and 8a.

An actuator 10 is provided in a region below the slide block 8. The actuator 10 comprises an annular cylinder chamber 11 formed about the centre axis of the turntable 2 and an annular piston 12 accommodated in the cylinder chamber 11 for slidably moving in the direction of the centre axis of the turntable 2. Oil passages 15 and 16 communicate with hydraulic chambers 13 and 14 which are defined by the cylinder chamber 11 and the piston 12. The upper end of the piston 12 is adapted to abut against the slide block 8.

The third dog teeth 9a are brought into common meshing engagement with the first dog teeth 6a and the second dog teeth 7a, so as to couple the first and second dog teeth together, when the slide block 8 and the joint block 9 are displaced in the upward direction as viewed in the drawings. The third dog teeth 9a are disengaged from the first and second dog teeth 6a, 7a when the slide block 8 and joint block 9 are displaced in the downward direction. Thus, a coupling arrangement 20 is constituted by the slide block 8, the joint block 9, the third dog teeth 9a and the actuator 10.

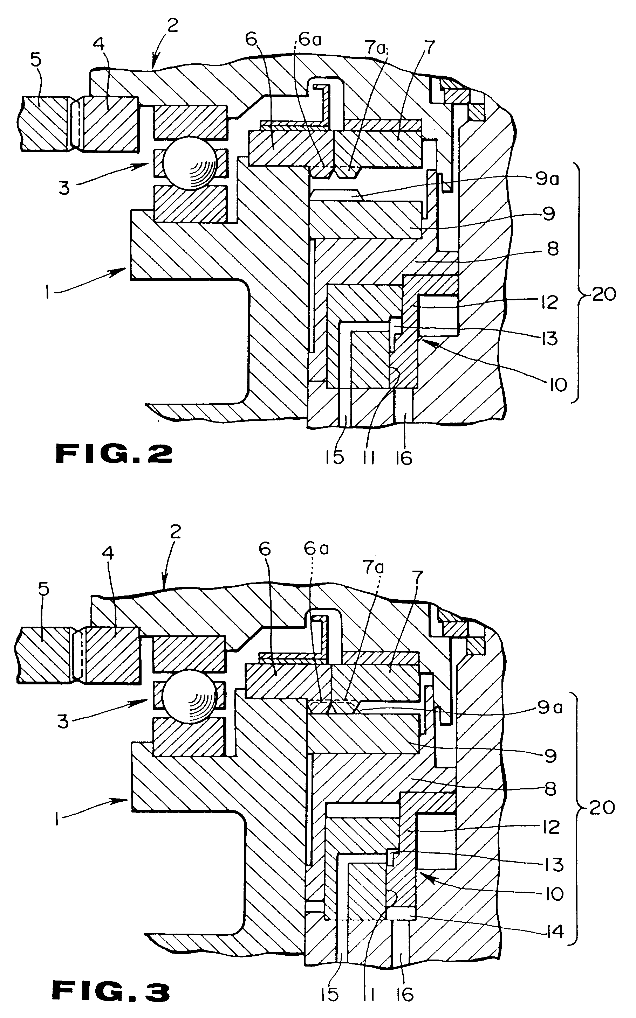

As shown in Figure 2, while the piston 12 is situated at the lowered position, the third dog teeth 9a are parted from the first and second dog teeth 6a, 7a, permitting the turntable 2 to be rotated in a free relationship relative to the frame 1 as a rotational force is transmitted to the turntable 2 from the motor (not shown) via the gear 5 and the ring gear 4. While this state is maintained, the turntable 2 is continuously turned in the machining mode described above.

Alternatively, as shown in Figure 3, when the slide block 8 is raised up by an increased hydraulic pressure in the hydraulic chamber 14, the third dog teeth 9a come into meshing engagement with the first and second dog teeth 6a, 7a to couple these teeth, and hence the frame 1 and the turntable 2, immovably to each other via the third dog teeth 9a. Thus the turntable 2 is brought into a locked state relative to the frame 1. As long as this state is maintained, operation can be carried out in the indexing mode discussed above and the turntable 2 is not displaced from its normal position under the influence of load exerted thereon during a period of machining operation, irrespective of how heavily a workpiece fixably mounted on the turntable 2 is machined by a cutting tool.

It is to be noted that as the first and second dog teeth 6a, 7a, are arranged in an annular relationship, it suffices that the machine tool is provided with several third dog teeth 9a adapted to mesh with some of the first dog teeth 6a and some of the second dog teeth 7a. The third dog teeth 9a do not have to be disposed in a complete annular configuration. Alternatively if the third dog teeth 9a are provided in a complete annular configuration, neither the first dog teeth 6a nor the second dog teeth 7a need to be provided in a complete annular configuration.

Alternatively, first dog teeth replacing the dog teeth 6a, second dog teeth replacing the dog teeth 7a and third dog teeth replacing the dog teeth 9a may be arranged on an identical plane intersecting the centre axis of the turntable at right angles so that the third dog teeth are brought into meshing engagement with the first and second dog teeth by displacing the third dog teeth along this plane.

Further, first dog teeth replacing the dog teeth 6a, second dog teeth replacing the dog teeth 7a and third dog teeth replacing the dog teeth 9a may be arranged in a spaced relationship in the direction of the centre axis of the turntable so that the third dog teeth are brought into meshing engagement with the first and second dog teeth by displacing the third dog teeth in the direction of the centre axis of the turntable.

Since the actuator in accordance with the illustrated embodiment is constructed in an annular configuration in such a manner that an annular cylinder chamber and an annular piston are arranged concentrically about the centre axis of the turntable, the space required for mounting the actuator is minimised, resulting in the machine tool being designed and constructed in minimum dimensions.

In the illustrated embodiment, the actuator is a hydraulic actuator. Alternatively, it may be a pneumatic cylinder. The actuator can be other than a cylinder type. A motor or the like means may be employed as an actuator.

As will be readily apparent from the above description, the present invention is widely applicable to a machine tool of the type including a housing serving as a frame therefor and a turntable turnably supported on the housing wherein the machine tool has such a mode that the turntable can be used also while it is kept immovable relative to the housing.

## Claims

1. A machine tool including
a housing (1);
a turntable (2) turnably supported on the housing;
a plurality of first dog teeth (6a) stationary with the housing;
a plurality of second dog teeth (7a) fast with the turntable;
joint means including a plurality of third dog teeth (9a) and an actuator (10) for bringing the third dog teeth into meshing engagement with the first and second dog teeth to place the turntable in a locked state relative to the housing and for disengaging such engagement;
a ring gear (4) for rotating the turntable when the ring gear comes into meshing engagement with a gear (5) driven by a drive source; and
a bearing (3) interposed between the housing and the turntable and capable of receiving a load applied in the direction of a rotational axis of the turntable during machining, characterised in that:-
the ring gear (4) is secured to the turntable at an outer periphery of the turntable in the vicinity of a work setting surface of the turntable; and
the bearing (3) is positioned radially outwards of the first, second and third dog teeth (6a,7a,9a).

2. A machine tool as claimed in claim 1, characterised in that the first dog teeth (6a) and the second dog teeth (7a) are arranged in an annular configuration extending about the centre axis of the turntable (2).

3. A machine tool as claimed in claim 1 or 2, characterised in that the third dog teeth (9a) are arranged in an annular configuration extending about the centre axis of the turntable (2).

4. A machine tool as claimed in any preceding claim, characterised in that the first dog teeth (6a), the second dog teeth (7a) and the third dog teeth (9a) are arranged on an identical plane intersecting the centre axis of the turntable (2) at right angles.

5. A machine tool as claimed in claim 4, characterised in that the third dog teeth (9a) are displaceable in the direction of the centre axis of the turntable.

6. A machine tool as claimed in any preceding claim, characterised in that the actuator (10) is a cylinder type actuator comprising an annular cylinder chamber (11) formed in the housing (1) about the centre axis of the turntable (2) and an annular piston (12) accommodated in the cylinder chamber for sliding movement in the direction of the centre axis of the turntable.

## Patentansprüche

1. Werkzeugmaschine mit:
einem Gehäuse (1);
einem drehbar auf dem Gehäuse gelagerten Drehtisch (2);
einer Anzahl in Bezug zu dem Gehäuse ortsfester erster Greifzähne (6a);
einer Anzahl in Bezug zu dem Drehtisch feststehender zweiter Greifzähne (7a);
einer Verbindungsvorrichtung mit einer Anzahl dritter Greifzähne (9a) und einem Stellglied (10), um die dritten Greifzähne in ineinandergreifende Eingriffslage mit den ersten und zweiten Greifzähnen zu bringen, um den Drehtisch in einen verriegelten Zustand in Bezug zu dem Gehäuse zu versetzen und um eine solche Eingriffslage zu lösen;
einem Ringzahnrad (4) zum Drehen des Drehtisches beim ineinandergreifenden Einrücken des Ringzahnrades mit einem von einer Antriebsquelle angetriebenen Zahnrad (5); und
einem Lager (3), das zwischen dem Gehäuse und dem Drehtisch eingefügt und fähig ist, eine während der Bearbeitung in Richtung der Drehachse des Drehtisches wirkende Belastung aufzunehmen, dadurch gekennzeichnet, daß:
das Ringzahnrad (4) am Drehtisch an dessen äußerem Rand in der Nähe einer Werkstückaufnahmefläche des Drehtisches befestigt ist; und
das Lager (3) radial außerhalb der ersten, zweiten und dritten Greifzähne (6a, 7a, 9a) angeordnet ist.

2. Werkzeugmaschine nach Anspruch 1, dadurch gekennzeichnet, daß die ersten Greifzähne (6a) und die zweiten Greifzähne (7a) in einer sich um die Mittelachse des Drehtisches (2) herum erstreckenden Ringkonfiguration angeordnet sind.

3. Werkzeugmaschine nach Anspruch 1 oder 2, dadurch gekennzeichnet, daß die dritten Greifzähne (9a) in einer sich um die Mittelachse des Drehtisches (2) herum erstreckenden Ringkonfiguration sind.

4. Werkzeugmaschine nach einem der vorstehenden Ansprüche, dadurch gekennzeichnet, daß die ersten Greifzähne (6a), die zweiten Greifzähne (7a) und die dritten Greifzähne (9a) in der selben die Mittelachse des Drehtisches (2) rechtwinklig schneidenden Ebene angeordnet sind.

5. Werkzeugmaschine nach Anspruch 4, dadurch gekennzeichnet, daß die dritten Greifzähne (9a) in Richtung der Mittelachse des Drehtisches verschiebbar sind.

6. Werkzeugmaschine nach einem der vorstehenden Ansprüche, dadurch gekennzeichnet, daß das Stellglied (10) ein zylinderartiges Stellglied mit einer in dem Gehäuse (1) um die Mittelachse des Drehtisches (2) herum ausgebildeten ringförmigen Zylinderkammer (11) und einem in der Zylinderkammer untergebrachten ringförmigen Kolben (12) zur gleitenden Bewegung in Richtung der Mittelachse des Drehtisches ist.

## Revendications

1. Machine-outil comprenant :
- un bâti (1);
- une table rotative (2) supportée par et pouvant tourner sur le bâti;
- une pluralité de premières dents-de-chien (6a) fixées sur le bâti;
- une pluralité de deuxièmes dents-de-chien (7a) fixées à la table tournante;
- des moyens de liaison comprenant une pluralité de troisièmes dents-de-chien (9a) et une commande (10) pour amener les troisièmes dents-de-chien à s'engrener avec les premières et deuxièmes dents-de-chien, pour verrouiller la table rotative par rapport au bâti, et pour les désengager ;
- un pignon annulaire (4) permettant de faire tourner la table rotative quand le pignon annulaire vient s'engrener avec un pignon actionné par un moteur ; et
- un palier (3) interposé entre le bâti et la table tournante et capable de recevoir une charge appliquée dans le sens de l'axe de rotation de la table tournante durant l'usinage, caractérisés en ce que :
- le pignon annulaire (4)est assujetti à la table tournante à sa périphérie extérieure, à proximité de la surface de travail de la table tournante; et
- le palier (3) est placé radialement vers l'extérieur des premières, deuxièmes et troisièmes dents-de-chien (6a,7a,9a).

2. Machine-outil selon la revendication 1, caractérisée en ce que les premières dents-de-chien (6a) et les deuxièmes dents-de-chien (ta) sont arrangées en une configuration annulaire s'étendant autour de l'axe central de la table rotative (2).

3. Machine-outil selon l'une des revendications 1 ou 2, caractérisée en ce que les troisièmes dents-de-chien (9a) sont arrangées en une configuration annulaire s'étendant autour de l'axe central de la table rotative (2).

4. Machine-outil selon l'une des revendications précédentes, caractérisée en ce que les premières dents-de-chien (6a), les deuxièmes dents-de-chien (7a) et les troisièmes dents-de-chien (9a) sont disposées dans un plan identique faisant intersection avec l'axe central de la table rotative (2) à angles droits.

5. Machine-outil selon la revendication 4, caractérisée en ce que les troisièmes dents-de-chien (9a) sont déplaçables dans le sens de l'axe central de la table rotative.

6. Machine-outil selon l'une des revendications précédentes, caractérisée en ce que l'commande (10) est une commande du type cylindre comprenant une chambre cylindrique annulaire (11) formée dans le bâti (1) autour de l'axe central de la table rotative (2) et un piston annulaire (12) placé dans la chambre cylindrique pour un mouvement glissant dans le sens de l'axe central de la table rotative.
